# EUROPEAN PATENT APPLICATION

(11) **EP 4 252 547 A1**
(43) Date of publication of application: **04.10.2023**
(21) Application number: 20963726.3
(22) Date of filing: 30.11.2020
(51) Int. Cl.: A23L 7/196, A23L 5/10, A23L 29/212, A23P 20/10

(54) **RICE BALL WITH TOASTED EXTERIOR AND METHOD FOR PREPARING SAME**

(71) Applicant: CJ Cheiljedang Corporation, Seoul 04560 (KR)
(72) Inventor: SON, Eun Yeong, Suwon-si, Gyeonggi-do 16495 (KR); LEE, Jun Woo, Suwon-si, Gyeonggi-do 16495 (KR); SONG, Min Kyung, Suwon-si, Gyeonggi-do 16495 (KR); JEONG, Da Woon, Suwon-si, Gyeonggi-do 16495 (KR); KANG, Hee Jun, Suwon-si, Gyeonggi-do 16495 (KR); LEE, Jong Il, Suwon-si, Gyeonggi-do 16495 (KR)
(74) Representative: Cabinet Laurent & Charras
(86) International application number: PCT/KR2020/017308
(87) International publication number: WO 2022/114332

(57) **Abstract**

The present application relates to molded rice with toasted exterior and a method for preparing the same. The molded rice of the present application undergoes a baking to have the exterior that looks toasted and has a unique flavor. Moreover, the molded rice of the present application has a firm and crunchy exterior akin to toasted rice, while being moist inside. Additionally, the molded rice of the present application has an outer of fried rice containing ingredients to exhibit the ingredient texture and has very excellent molding stability by maintaining the shape of the molded rice even after molding and cooking.

## Description

### [Technical Field]

The present application relates to molded rice with toasted exterior and a method for preparing the same.

### [Background Art]

A rice ball or molded rice is a rice dish prepared by adding materials such as vegetables and seaweed powder, kneading rice with various seasonings by hand or putting rice together using a certain shape of mold. Rice balls are easily made and good portable and thus have been often used as snacks or meal replacements. As common rice balls, spherical rice balls are commonly used, and triangular rice balls called triangle gimbap are consumed a lot, and recently, pillar-shaped rice balls, which are wrapped on the outside with seaweed and contain minor ingredients in the rice, are also gaining popularity. In addition, fried rice balls prepared by making fried rice with onions, carrots, ham, etc. as ingredients, largely putting the fried rice together, and then frying the fried rice coated with flour, egg wash and bread crumbs have also been developed.

It is very advantageous in terms of taste, texture, or nutrition when rice balls are prepared by adding a large amount of fillings or minor materials or by using fried rice instead of rice as an ingredient. However, when a lot of minor materials are used or fried rice is used, there is a problem in that it is difficult to prepare the rice balls hard enough to maintain the shape of the rice ball.

### [Prior Art Document]

### [Patent Document]

Korean Laid-open Patent Publication No. 10-2012-0034154

### [Disclosure]

### [Technical Problem]

The present inventors made studies and efforts to prepare molded rice capable of maintaining high molding stability while maintaining the ingredient texture of fried rice in molded rice, which was prepared with fried rice containing large-sized ingredients as a main material, having toasted exterior and crunchy texture, and maintaining a moist texture therein. As a result, the present inventors confirmed that molded rice may be prepared with an outer and an inner of filling of the fried rice containing the ingredients, and molded rice with the desired characteristic may be successfully prepared by including a binder component in the molded rice, and then completed the present application.

Accordingly, an object of the present application is to provide molded rice which is prepared with fried rice containing a large amount of large ingredients to have high molding stability, a crunchy texture on the outer surface, and a moist texture therein.

Another object of the present application is to provide a method for preparing molded rice with the above described characteristics.

### [Technical Solution]

In order to achieve the above object,
an aspect of the present application provides
molded rice including an inner and an outer,
wherein the outer includes rice, a binder and ingredients,
the ingredients have sizes of 5 mm or more and are included in an amount of 5 to 40 wt% based on the total weight of the molded rice,
the hardness of the outer surface of the molded rice is 200 g or more, and
a difference in moisture content between the outside and the inside of the outer is 3% or more.

Another aspect of the present application provides
a method for preparing molded rice including an inner and an outer, including:
(a) preparing fried ingredients by mixing ingredients and a binder;
(b) preparing an outer by mixing rice with the fried ingredients;
(c) inserting and molding an inner inside the prepared outer;
(d) drying the molded rice with hot air; and
(e) heat-treating the hot air-dried molded rice.

Hereinafter, the present application will be described in detail.

According to an aspect of the present application,
there is provided a molded rice including an inner and an outer,
wherein the outer includes rice, a binder and ingredients,
the ingredients have sizes of 5 mm or more and are included in an amount of 5 to 40 wt% based on the total weight of the molded rice,
the hardness of the outer surface of the molded rice is 200 g or more, and
a difference in moisture content between the outside and the inside of the outer is 3% or more.

As used herein, the term "molded rice" means food prepared by putting cooked rice or rice together in a certain shape such as a triangle, a square, or a circle.

The molded rice of the present application includes an inner and an outer.

As used herein, the term "inner" refers to a filling part of the molded rice located inside the molded rice, and the term "outer" refers to an outer part located outside the molded rice while wrapping the inner.

The inner may be ingredients without containing rice or cooked rice. The ingredients may be food materials or cooked food.

The inner may include various materials depending on a type of molded rice. For example, the inner may include cheese, butter, sauces (sautéed pepper paste, mayonnaise, ketchup, wasabi, curry, jajang, etc.); kimchi, kkakdugi; jangjorim, chicken, beef, pork, duck, bulgogi, ham, sausage, spam, bacon, egg, quail egg, tteokgalbi, stir-fried pork; chicken cutlet, pork cutlet, fish cutlet, hamburger steak; tuna, anchovy, pollack roe, flying fish roe; fried tofu, squid, octopus, webfoot octopus, cockle, fish cake, meatballs, fried shrimp; nuts, vegetables, soy meat, grains (red beans, corn, sorghum, millet, etc.); mixtures thereof; or foods cooked using these materials.

The inner may be included in an amount of more than 0 wt% to 15 wt% or less, specifically, more than 0 wt% to 14 wt% or less, more than 0 wt% to 13 wt% or less, more than 0 wt% to 12 wt% or less, more than 0 wt% to 11 wt% or less, more than 0 wt% to 10 wt% or less, or more than 0 wt% to 9 wt% or less, based on the total weight of molded rice for molding stability.

The inner may further include a binder. The binder may be starch, modified starch, glutinous grains, or a mixture of two or more thereof. The starch may be, for example, potato starch, corn starch, tapioca starch, sweet potato starch, or kudzu starch, and the modified starch may be oxidized starch, acetylated distarch adipate, acetylated distarch phosphate, starch sodium octenyl succinate, distarch phosphate, monostarch phosphate, phosphated distarch phosphate, starch acetate, hydroxypropyl distarch phosphate, or hydroxypropyl starch, but is not limited thereto. The glutinous grains are grains with glutinousness, and include, for example, glutinous rice, glutinous millet, waxy sorghum, glutinous corn, or glutinous barley, but are not limited thereto.

The binder may be included in an amount of exceeding 0 wt% to 3 wt% or less, exceeding 0 wt% to 2.9 wt% or less, exceeding 0 wt% to 2.8 wt% or less, exceeding 0 wt% to 2.7 wt% or less, exceeding 0 wt% to 2.6 wt% or less, exceeding 0 wt% to 2.5 wt% or less, exceeding 0 wt% to 2.4 wt% or less, or exceeding 0 wt% to 2.2 wt% or less based on the total weight of the inner.

In the outer, the ingredients having sizes of 5 mm or more may be included in an amount of 5 to 40 wt% based on the total weight of the molded rice. The ingredients mean raw materials of food, and may include greens, vegetables, fruits, fish, meat, or processed meat; and the ingredients may include, for example, pumpkin, onion, carrot, mushroom, shiitake mushroom, green onion, radish, kimchi, kkakdugi, paprika, apple, pear, shrimp meat, clam meat, pork, beef, chicken, ham, sausage, or egg, but are not limited thereto.

The size of the ingredient means the largest length of the length across the ingredient. The size of the ingredient may be 5 mm or more, specifically 5 to 65 mm, 6 to 63 mm, 7 to 62 mm, 8 to 61 mm, 8 to 60 mm, 8 to 55 mm, 8 to 50 mm, 8 to 45 mm, 8 to 40 mm, 8 to 35 mm, 8 to 30 mm, 8 to 25 mm, 8 to 20 mm, 8 to 18 mm, 8 to 16 mm, 8 to 14 mm, 8 to 12 mm, or 8 to 11 mm.

The ingredients may be included in an amount of 5 to 40 wt% based on the total weight of molded rice, specifically 5 to 38 wt%, 6 to 36 wt%, 6 to 34 wt%, 7 to 32 wt%, or 7 to 30 wt%.

The ingredients support the molding stability of molded rice, and exhibit an effect of imparting the ingredient texture to molded rice.

The outer may further include a binder. The binder may be starch, modified starch, glutinous grains, or a mixture of two or more thereof. The starch may be, for example, potato starch, corn starch, tapioca starch, sweet potato starch, or kudzu starch, and the modified starch may be oxidized starch, acetylated distarch adipate, acetylated distarch phosphate, starch sodium octenyl succinate, distarch phosphate, monostarch phosphate, phosphated distarch phosphate, starch acetate, hydroxypropyl distarch phosphate, or hydroxypropyl starch, but is not limited thereto. The glutinous grains are grains with glutinousness, and include, for example, glutinous rice, glutinous millet, waxy sorghum, glutinous corn, or glutinous barley, but are not limited thereto.

The binder may be included in an amount of 0.1 to 15 wt%, specifically, included in an amount of 0.5 to 15 wt%, 1 to 15 wt%, 1 to 14 wt%, 1 to 13 wt%, 1 to 12 wt%, 1 to 11 wt%, 1 to 10 wt%, 1 to 9 wt%, 1 to 8 wt%, 1 to 7 wt%, 1 to 6 wt%, or 1 to 5 wt% based on the total weight of the ingredients.

The binder improves the binding force of ingredients, rice, or between ingredients and rice in the outer, and consequently, increases the molding stability of the entire molded rice. In addition, there is an advantage in that these effects are maintained even during freezing and thawing without deteriorating the texture of the ingredients.

In the present application, the outer may include rice. Specifically, the rice included in the outer may be fried rice, and the fried rice may be kimchi fried rice, butter fried rice, dak-galbi fried rice, or red pepper paste bibimbap, but is not limited thereto.

For example, the fried rice may be prepared by frying the ingredients and then mixing the fried ingredients with rice.

In one embodiment, the weight ratio of ingredients: rice in the outer may be 10: 90 to 40: 60.

In one embodiment, the outer may be included in an amount of 85 to 99 wt% based on the total weight of the molded rice. Specifically, the outer may be included in an amount of 85 to 99 wt%, 86 to 99 wt%, 87 to 99 wt%, 88 to 99 wt%, 89 to 99 wt%, or 90 to 99 wt% based on the total weight of the molded rice.

In one embodiment, the weight ratio of the outer: inner may be 90: 10 to 99: 1.

In the present application, the hardness of the outer surface of the molded rice may be 200 g or more. Specifically, the hardness may be 200 g to 400 g, 250 g to 350 g, or 250 g to 300 g.

In one embodiment, the hardness may be a value measured with a Texture Analyzer after naturally thawing the frozen molded rice of the present application at room temperature overnight.

In the molded rice of the present application, the difference in moisture content between the outside and the inside of the outer may be 3% or more. Due to the difference in moisture content as described above, it is possible to eat the molded rice by distinguishing between the properly cooked and crunchy texture of the outside of the outer and the moist texture of the inside of the outer.

In one embodiment, the moisture content may be measured after naturally thawing the frozen molded rice at room temperature overnight.

When a straight distance from the outer surface of the molded rice in contact with the outside or room temperature to the surface of the outer in contact with the inner is defined as an outer depth, the "outside of the outer" means a portion of 0.1% to 10% of the outer depth from the outer surface, and the "inside of the outer" means a portion of the outer excluding the outside of the outer and the surface in contact with the inner.

Another aspect of the present application provides
a method for preparing molded rice including an inner and an outer, including:
(a) preparing fried ingredients by mixing ingredients and a binder;
(b) preparing an outer by mixing rice with the fried ingredients;
(c) inserting and molding an inner inside the prepared outer;
(d) drying the molded rice with hot air; and
(e) heat-treating the hot air-dried molded rice.

In step (a), the ingredients mean raw materials of food, and may include greens, vegetables, fruits, fish, meat, or processed meat, and the ingredients may include, for example, pumpkin, onion, carrot, mushroom, shiitake mushroom, green onion, radish, kimchi, kkakdugi, paprika, apple, pear, shrimp meat, clam meat, pork, beef, chicken, ham, sausage, or egg, but are not limited thereto.

The size of the ingredient may be 5 mm or more, specifically 5 to 65 mm, 6 to 63 mm, 7 to 62 mm, 8 to 61 mm, 8 to 60 mm, 8 to 55 mm, 8 to 50 mm, 8 to 45 mm, 8 to 40 mm, 8 to 35 mm, 8 to 30 mm, 8 to 25 mm, 8 to 20 mm, 8 to 18 mm, 8 to 16 mm, 8 to 14 mm, 8 to 12 mm, or 8 to 11 mm.

The binder may be starch, modified starch, glutinous grains, or a mixture of two or more thereof. The starch may be, for example, potato starch, corn starch, tapioca starch, sweet potato starch, or kudzu starch, and the modified starch may be oxidized starch, acetylated distarch adipate, acetylated distarch phosphate, starch sodium octenyl succinate, distarch phosphate, monostarch phosphate, phosphated distarch phosphate, starch acetate, hydroxypropyl distarch phosphate, or hydroxypropyl starch, but is not limited thereto. The glutinous grains are grains with glutinousness, and include, for example, glutinous rice, glutinous millet, waxy sorghum, glutinous corn, or glutinous barley, but are not limited thereto.

The binder may be included in an amount of 0.1 to 15 wt%, specifically, included in an amount of 0.5 to 15 wt%, 1 to 15 wt%, 1 to 14 wt%, 1 to 13 wt%, 1 to 12 wt%, 1 to 11 wt%, 1 to 10 wt%, 1 to 9 wt%, 1 to 8 wt%, 1 to 7 wt%, 1 to 6 wt%, or 1 to 5 wt% based on the total weight of the ingredients.

As used herein, the term "fried ingredient" or "fried ball" means that ingredients (raw materials) such as meat, seafood, and vegetables are seasoned and subjected to heat-treating such as stir-frying, boiling, poaching, cooking, or steaming, and the fried rice or bibimbap may be prepared by mixing rice with the fried ingredients or fried balls. The two terms "fried ingredient" or "fried ball" may be used interchangeably in the same meaning in this specification.

In step (a), the fried ingredients may be prepared by heating the ingredients and then mixing the heated ingredients with the binder, or also prepared by first mixing the ingredients with the binder and then heating the mixture, and are not limited to any one thereof.

In step (b), the fried rice is prepared by mixing rice with the fried ingredients and may be used as an outer.

In the outer, the weight ratio of ingredients:rice may be 10:90 to 40:60.

In one embodiment, the method may further include vacuum-cooling the prepared outer to a material temperature of 10 to 60°C after step (b).

In step (c), the "inner" may include various materials depending on a type of molded rice. For example, the inner may include cheese, butter, sauces (sautéed pepper paste, mayonnaise, ketchup, wasabi, curry, jajang, etc.); kimchi, kkakdugi; jangjorim, chicken, beef, pork, duck, bulgogi, ham, sausage, spam, bacon, egg, quail egg, tteokgalbi, stir-fried pork; chicken cutlet, pork cutlet, fish cutlet, hamburger steak; tuna, anchovy, pollack roe, flying fish roe; Fried tofu, squid, octopus, webfoot octopus, cockle, fish cake, meatballs, fried shrimp; nuts, vegetables, soy meat, grains (red beans, corn, sorghum, millet, etc.); mixtures thereof; or foods cooked using these materials.

The inner may be included in an amount of exceeding 0 wt% to 15 wt% or less, specifically, exceeding 0 wt% to 14 wt% or less, exceeding 0 wt% to 13 wt% or less, exceeding 0 wt% to 12 wt% or less, exceeding 0 wt% to 11 wt% or less, exceeding 0 wt% to 10 wt% or less, or exceeding 0 wt% to 9 wt% or less, based on the total weight of molded rice for molding stability.

The inner may further include a binder. The binder may be starch, modified starch, glutinous grains, or a mixture of two or more thereof. The starch may be, for example, potato starch, corn starch, tapioca starch, sweet potato starch, or kudzu starch, and the modified starch may be oxidized starch, acetylated distarch adipate, acetylated distarch phosphate, starch sodium octenyl succinate, distarch phosphate, monostarch phosphate, phosphated distarch phosphate, starch acetate, hydroxypropyl distarch phosphate, or hydroxypropyl starch, but is not limited thereto. The glutinous grains are grains with glutinousness, and include, for example, glutinous rice, glutinous millet, waxy sorghum, glutinous corn, or glutinous barley, but are not limited thereto.

The binder may be included in an amount of exceeding 0 wt% to 3 wt% or less, exceeding 0 wt% to 2.9 wt% or less, exceeding 0 wt% to 2.8 wt% or less, exceeding 0 wt% to 2.7 wt% or less, exceeding 0 wt% to 2.6 wt% or less, exceeding 0 wt% to 2.5 wt% or less, exceeding 0 wt% to 2.4 wt% or less, or exceeding 0 wt% to 2.2 wt% or less based on the total weight of the inner.

In one embodiment, the weight ratio of outer: inner may be 90: 10 to 99: 1.

In one embodiment, the hot-air drying in step (d) may be performed at a temperature of 160 to 240°C for 1 to 600 seconds. In the case of hot-air drying in the range, the surface of the molded rice is partially hardened, so that the process may be performed without disturbing the shape of the molded rice even during the subsequent preparing process.

In one embodiment, the heat-treating of step (e) may be performed for 1 to 600 seconds by radiant heat. Specifically, the heat-treating may be performed, for example, in an infrared oven.

In one embodiment, before the heat-treating of the molded rice in step (e), a step of coating a sauce on the surface of the molded rice may be further included. When the sauce is coated on the surface of the molded rice, the flavor of the molded rice may be increased by inducing the flavor reaction of the sauce during the heat-treating process.

In one embodiment, the heat-treating of step (e) may be performed twice or more, and the sauce may be coated on the surface of the molded rice before each heat-treating of the molded rice.

In one embodiment, when the heat-treating of step (e) is performed twice or more, an inversion process may be further included between the heat-treating steps. For example, in the case of performing heat-treating twice, after the first heat-treating, the surface of the molded rice subjected to the first heat-treating may be positioned to an opposite side through the inversion process, and then the second heat-treating may be performed. When the inversion process is added, the heat-treating on both surfaces of the molded rice may be performed, so that a crunchy texture akin to toasted rice may be felt throughout the outer.

In one embodiment, when the heat-treating is performed twice or more in step (e), a sauce coating process and an inversion process may be combined. For example, the molded rice is coated with the sauce, the first heat-treating is performed, and then the surface of the molded rice is positioned on the opposite side through the inversion process. Subsequently, the opposite side of the molded rice is coated with the sauce, and a second heat-treating is performed.

In another embodiment, a step of freezing the prepared molded rice may be further included after step (e).

The hardness of the outer surface of the prepared molded rice may be 200 g or more. Specifically, the hardness may be 200 g to 400 g, 250 g to 350 g, or 250 g to 300 g.

In one embodiment, the hardness may be a value measured with a Texture Analyzer after naturally thawing the frozen molded rice of the present application at room temperature overnight.

In the molded rice of the present application, the difference in moisture content between the outside and the inside of the outer may be 3% or more.

In one embodiment, the moisture content may be measured after naturally thawing the frozen molded rice at room temperature overnight.

When a straight distance from the outer surface of the molded rice in contact with the outside or room temperature to the surface of the outer in contact with the inner is defined as an outer depth, the "outside of the outer" means a portion of 0.1% to 10% of the outer depth from the outer surface, and the "inside of the outer" means a portion of the outer excluding the outside of the outer and the surface in contact with the inner.

### [Advantageous Effects]

The present application relates to molded rice with toasted exterior and a method for preparing the same. The molded rice of the present application undergoes a baking process to have the exterior that looks toasted and have a unique flavor. Moreover, the molded rice of the present application has a firm and crunchy texture akin to toasted rice, while being moist inside. Additionally, the molded rice of the present application has an outer of fried rice containing ingredients to exhibit the ingredient texture and has very excellent molding stability by maintaining the shape of the molded rice even after molding and cooking.

However, the effects of the present application are not limited to the above-mentioned effects, and other effects not mentioned will be clearly understood by those skilled in the art from the following description.

### [Description of Drawings]

FIG. 1 is a photograph showing physical properties of fried balls (fried ingredients) prepared by adding different starch contents of 0%, 1%, 5%, 10%, and 15%.
FIG. 2A is a photograph showing the molding stability of rice balls prepared with fried balls added with starch.
FIG. 2B is a photograph showing the molding stability of rice balls prepared with fried balls prepared without adding starch.

### [Best Mode]

Hereinafter, the present application will be described in detail by Examples. However, the following Examples specifically illustrate the present application, and the content of the present application is not limited by the following Examples.

### Example

### Preparation Example 1: Preparation of ingredients

For the preparation of "kimchi cheese rice balls", cooked rice, oil, vegetables, kimchi (10 mm dice), sauces, and mozzarella string cheese were prepared. For the preparation of "bulgogi rice balls", cooked rice, oil, vegetables, pork, sauces, etc. were prepared. To the preparation of "butter jangjorim rice balls", cooked rice, oil (including butter), vegetables, eggs, sauces, jangjorim (30 mm jangjorim), etc. were prepared. Starch was used as a binding material for all rice balls.

### Preparation Example 2: Preparation of molded rice (rice balls)

First, fried balls for use in outer and inner of a molded rice were prepared. The cooked rice was mixed with the outer fried balls and the inner fried balls prepared above. The mixture was vacuum-cooled to a material temperature of 10 to 60°C. After inserting the inner into the outer, rice balls were molded. The surface of the molded rice ball was hardened through hot-air baking at a temperature of 160 to 240°C for 1 to 600 seconds. Then, in an infrared oven, infrared baking was performed for 1 to 600 seconds. Baking in an infrared oven was performed as follows. First, for rice balls that required surface sauce coating, first infrared baking was performed after coating the surface of the molded rice with the sauce, and then in order to coat the opposite surface of the molded rice with the sauce, the molded rice was inverted and the sauce was coated, and second infrared backing was performed again. Through infrared baking, while the effect of maintaining the shape of the outer was increased, the inside was moist and the outside had a crunchy texture like toasted rice. The baked rice balls were frozen at a material temperature of - 7°C or less.

### Experiment Example 1: Measurement of molding stability by binder

Fried balls were prepared by adding starch as a binder when preparing fried balls to be used in an outer or an inner. In addition, as Comparative Example, the fried balls were prepared without adding a binder component when preparing the fried balls.

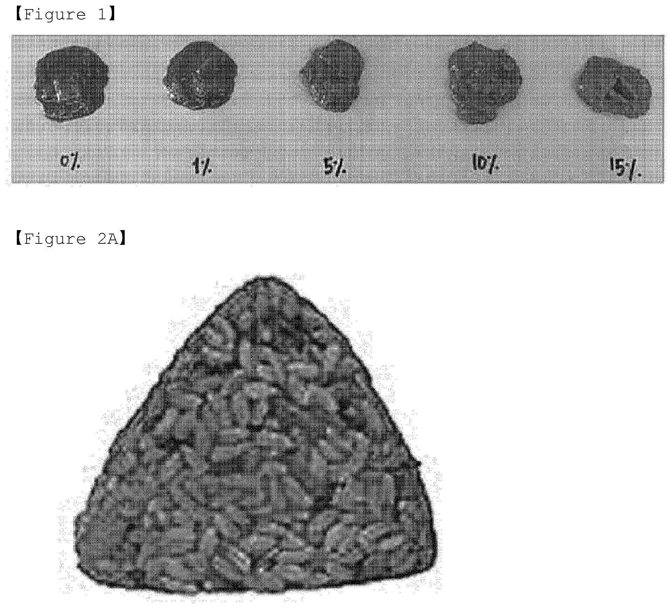

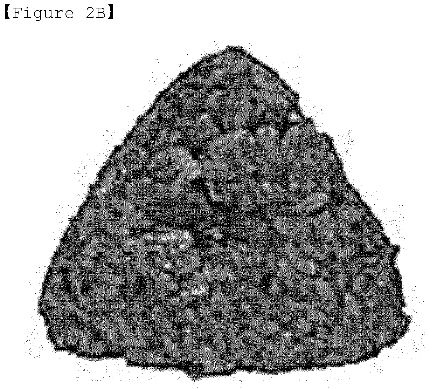

As can be seen in a photograph showing the physical properties of the fried ball according to an added starch content (0% to 15%) of FIG. 1, it was confirmed that when starch was not added (0%), the fried balls were weak and thus the molding stability was poor. The rice balls were prepared using the prepared fried balls with added starch and fried balls without adding starch. As a result of preparing rice balls using the fried balls, when starch was added to the fried balls, the molding stability of the rice balls was very good (FIG. 2A). However, when using fried balls prepared without adding starch, the molding stability of the molded rice balls was low, and thus it was observed that in the non-freezing state, the exterior of the molded rice easily changed even with a small impact, and the binding force of rice grains around the ingredients (mushroom and carrot in the photograph) was relatively weakened (FIG. 2B) .

### Experiment Example 2: Measurement of physical properties of molded rice (rice ball)

### 1. Measurement of moisture content

Frozen rice balls were prepared by baking according to the method of Preparation Example 2, frozen rice balls were prepared without baking, and each frozen molded rice was thawed overnight at room temperature, and then the moisture content values were measured by separating the surface and the inside (AND MX-50 Moisture analyzer) . At this time, the surface was measured by cutting only the rice part of the outer to a thickness of about 0.5 cm from the surface in order to measure only the toasted surface of the rice ball, and the inside was measured by using only the rice of the inside of the outer closest to the filling of the rice ball.

As a result of the measurement, it was confirmed that the moisture content of the surface of the molded rice directly exposed to a hot oven was lower than that of the core of the molded rice (Table 1). Accordingly, it was confirmed that the moisture content of the surface of the molded rice with baking was lower than that of the inside of the molded rice compared to the molded rice without baking.

**[Table 1]**

| | Surface (toasted side) | Core |
|---|---|---|
| When not performing baking process | 54.5% | 54.7% |
| When performing baking process | 51.9% | 55.7% |

### 2. Measurement of TA

Rice balls (T1, applied with a mixture of Jeonju bibim rice ball) frozen immediately after molding without a baking process and rice balls (T2, applied with a mixture of Jeonju bibim rice ball) frozen after a baking process according to the method of Preparation Example 2 were prepared. The prepared frozen rice balls were thawed overnight at room temperature, and then the hardness values were measured (TA.XT.PLUS texture analyzer).

As a result of the measurement, it was confirmed that the hardness value of the T2 molded rice prepared through the baking process was higher than that of the T1 molded rice prepared without the baking process. According to these results, it was confirmed that the surface of the toasted molded rice was somewhat harder than that of a general non-toasted rice ball.

**[Table 2]**

| | T1 molded rice (non-baking) | T2 molded rice (baking) |
|---|---|---|
| AVG | 130.886 g | 273.508 g |
| STD | 36.439 g | 46.894 g |

Hereinabove, representative embodiments of the present application have been exemplarily described, but the scope of the present application is not limited to the specific embodiments as described above, and can be changed appropriately by those skilled in the art within the scope described in the appended claims of the present application.

## Claims

1. Molded rice comprising an inner and an outer,
wherein the outer includes rice, a binder and ingredients, wherein the ingredients have sizes of 5 mm or more and are included in an amount of 5 to 40 wt% based on the total weight of the molded rice,
the hardness of the outer surface of the molded rice is 200 g or more, and
a difference in moisture content between the outside and the inside of the outer is 3% or more.

2. The molded rice of claim 1, wherein the binder included in the outer is at least one selected from the group consisting of starch, modified starch, and glutinous grains.

3. The molded rice of claim 1, wherein in the outer, a weight ratio of ingredients: rice is 10: 90 to 40: 60.

4. The molded rice of claim 1, wherein a weight ratio of the outer: inner is 90: 10 to 99: 1.

5. The molded rice of claim 1, wherein the rice included in the outer is fried rice.

6. The molded rice of claim 1, wherein the inner is ingredients or food materials without containing rice or cooked rice.

7. A method for preparing molded rice including an inner and an outer comprising:
(a) preparing fried ingredients by mixing ingredients and a binder;
(b) preparing an outer by mixing rice with the fried ingredients;
(c) inserting and molding an inner inside the prepared outer;
(d) drying the molded rice with hot air; and
(e) heat-treating the hot air-dried molded rice.

8. The method for preparing the molded rice of claim 7, wherein the hot-air drying in step (d) is performed at a temperature of 160 to 240°C for 1 to 600 seconds.

9. The method for preparing the molded rice of claim 7, wherein the heat-treating of step (e) is performed for 1 to 600 seconds by radiant heat.

10. The method for preparing the molded rice of claim 7, further comprising:
coating a sauce on the surface of the molded rice, before the heat-treating the molded rice in step (e).

11. The method for preparing the molded rice of claim 7, wherein the heat-treating of the molded rice in step (e) comprises a first heat-treating step, an inversion step of the molded rice, and a second heat-treating step.

12. The method for preparing the molded rice of claim 7, wherein in the step (a), the ingredient has a size of 5 mm or more.

13. The method for preparing the molded rice of claim 7, wherein the hardness of the outer surface of the molded rice is 200 g or more.

14. The method for preparing the molded rice of claim 7, wherein a difference in moisture content between the outside and the inside of the outer of the molded rice is 3% or more.
